# EUROPEAN PATENT SPECIFICATION

(11) **EP 1 968 387 B1**
(45) Date of publication and mention of the grant of the patent: **02.02.2011**
(21) Application number: 06846685.3
(22) Date of filing: 19.12.2006
(51) Int. Cl.: A23L 1/10, A23L 1/164, A23L 1/168, A21D 13/00

(54) **CONTINUOUS PRODUCTION PROCESS OF MASA FLOUR AND WHOLE-CORN FLOUR FOR GRAIN-BASED FOODS, COMPRISING A PRECOOKING STEP**
KONTINUIERLICHES HERSTELLUNGSVERFAHREN VON MASA-MEHL UND VOLLKORNMEHL FÜR NAHRUNGSMITTEL AUF GETREIDEBASIS UNTER VERWENDUNG EINES VORGARUNGSSCHRITTS
PROCEDE DE PRODUCTION CONTINUE DE FARINE DE MASA ET DE FARINE DE MAIS COMPLETE POUR PRODUITS ALIMENTAIRES CEREALIERS, COMPRENANT UNE ETAPE DE PRECUISSON

(30) Priority: 22.12.2005 US 313765
(43) Date of publication of application: 17.09.2008
(73) Proprietor: Investigación De Tecnologia Avanzada, S.A. DE C.V., Ave Ruiz Cortines S/N Frente a colonia la Purisima Entre Gral. Bonifacio Salinas y Carretera Migual Aleman Guadalupe, N.L. México C.P. 67110 (MX)
(72) Inventor: RUBIO, Felipe A., Edinburg, Texas 78539 (US); RUBIO, Manuel J., Miami Beach, Florida 33139 (US); CONTRERAS, Roberto, Guadalupe, N.L., 67110 (MX); SOSA, Francisco, Guadalupe, N.L., 67110 (MX); RAMIREZ, J. Fernando, Guadalupe, N.L., 67110 (MX)
(74) Representative: Neij, Hans Mikael
(86) International application number: PCT/US2006/062301
(87) International publication number: WO 2007/076356

(56) References cited:
- US-A- 4 256 771
- US-A- 4 594 260
- US-A1- 2003 059 516
- US-A1- 2004 105 925
- US-B1- 6 326 045
- US-B1- 6 344 228
- US-B1- 6 638 554
- HOUGHTON MIFFLIN COMPANY: 'Definition of Bran' THE AMERICAN HERITAGE DICTIONARY OF THE ENGLISH LANGUAGE, [Online] vol. FOURTH EDITION, Retrieved from the Internet: <URL:http://www.education.yahoo.com/referen ce/dictionary/entry/bran_ytt=Amuivi1Q6AtySG s47_2Ri4asgMMF>

## Description

### BACKGROUND OF INVENTION

### 1. Field of the invention

The present invention refers to a hydrothermal process for the manufacture of novel corn flours and, more particularly, relates to a continuous low-moisture precooking process applied to the production of pregelatinized masa flour for corn-based and instant whole-corn flour for the elaboration of grain-based foods.

### 2. Description of the Related Art

The production of high-quality masa and corn flours can be achieved by conventional and modem techniques (dry and wet milling) only if the food-grade corn has the following characteristics: uniformity in kernel size and hardness, a low number of stress-cracks and kernel damage, and ease of pericarp removal during the lime-water cooking process. The five general classes of corn-flint, popcorn, flour, dent and sweet-are based on kernel characteristics. Since dent corn is a derivative of flint-flour crosses, it can show significant differences in the ratio of horny to floury endosperm caused by genotype and environmental factors. A common classification of maize based on endosperm quality and commercial production distinguishes their types: 1) Sweet with <1% for processed-vegetable, 2) Pop with 1% for confection, 3) Flour with 12% for food, 4) Flint with 14% and 5) Dent with 73% for feed/ food.

The ratio of horny (hard and translucent) to floury (soft and opaque) endosperm may average about 1-2:1 in yellow and white-dent corn (*Pomeranz et al.,* 1984 and *Gonzalez,* 1995). It is known that the food grade corn (U.S. No. 1 and 2: USFGC, 1996) should be partially cooked before it is formed into the end products, so as to cause it to be a novel precooked corn flour. White-kernel corn may contain: 11.0-11.5% moisture, 72.2-73.2% starch/non-starch polysaccharides, 9.8-10.5% protein, 3.7-4.6% fat and 1.1-1.7% ash. For example, a dry-milled corn sample might yield, on a dry weight basis, 74.8-76.2% total endosperm, 18.9-20.5% germ and 3.3-6.3% bran. The mature dent kernel (*Watson,* 1987; FAO, 1993) has four separable components, on a dry weight basis: tip cap (0.8-1.1%), pericarp (5.1-5.7%) and aleurone (2.0-3.0 %), endosperm (78.3-81.9%), and germ (10.2-11.9%). In dry or wet-milling processes, the separated bran includes the pericarp-layer, tip cap, aleurone-layer (isolated with bran) and adhering pieces of starchy endosperm as well (FAO, 1993). A native corn bran contained dietary fiber (57-76%), some starch (4-22%), proteins (5-8%) and fat (2-7%) arising from endosperm tissue and glycoprotein as well (*Saulnier et al.* 1995 and *Hromadkova et al.* 1995).

In the dry-milling process, the primary product is isolated pieces of floury and horny endosperm, which are recovered by progressive milling, sieving (or classifying) and aspiration process. To recover starch by wet-milling, the granules within the endosperm cells must be released from the protein matrix (gluten) by treating corn (or endosperm) with alkali or an acidic reducing-agent (preferably sulfur-dioxide or lactic-acid) in a steeping process. A shelled corn (with 18 MM-Btu/ton-corn) through wet milling refining can yield: 55% starch (or 58% sugars or 15-30% dry-ethanol), 20% animal feed (fiber/protein), 5% gluten meal (protein), 2% oil and 18% corn-steep liquor (feed or fermentation substrate). A modular wet mill unit (mini-biorefinery: MBR) can produce high-valued products from the low-value fuel ethanol operation (33% yield at $660/ton or >$18 USD/MM-Btu). Corn represents about the 40% of the total ethanol production cost ($300/ton) and energy about 33% (gas or oil). Energy recovery and renewable energy have supplied more than 80% in the US incremental energy requirement since 1973 ($0.25 USD/MM-Btu). But given today's high prices for natural gas ($3.50 USD in 2000 and $6 to 12 USD during 2005: oilnergy.com), no realistic price reductions will happen without concerted international and national programs and incentives to encourage the faster adoption of efficient and renewable energy (biofuel and hydrogen) as well as natural gas. The success and cost effectiveness of this integrated approach has been tested by redesigning or continuous-improvement of industrial processes: reduce/recycle/re-sell waste, reduce energy use and emissions (*Acee,* 1997).

Nixtamalized corn flour (NCF) is produced by the steps of alkaline cooking (heating and steeping) of corn, washing, wet milling the nixtamal, and drying, thereby producing corn masa flour. At the industrial or commercial level, the milling and dehydration process steps are major cost factors. This precooked flour is sieved and blended for different product applications and it is usually supplemented with additives before packaging for commercial table or packaged-tortilla and corn-based foods. In a commercial operation, corn solid loss has been estimated at 5-14% depending on the type of corn (hard or soft) and on the severity of the cooking, washing and drying process (*Jackson et al.* 2001 and *Bressani,* 1990). Properly processed industrial corn or masa flour simplifies the production of tortilla products, because the customer eliminates management techniques required for wastewater treatment, securing, handling and processing corn into masa for tortillas and snacks. However, a pregelatinized corn flour might have the following quality and cost limitations: high cost, lack of flavor/aroma, and poor texture. Most commercial masa flours for same applications (chip/taco and tortilla) had different physical, chemical and pasting properties. Coarse flour (>35, 20 mesh) had a lower peak viscosity and fine flour (>120,100 mesh) showed a higher peak viscosity, suggesting that coarse-flours (chip/taco) hydrate more slowly (longer peak-time) and develop less viscosity than fine-flours (*Almeida-Dominguez et al.* 1996). As the market for corn/tortilla snacks ($4.5 billion-retail sales in popular savory snacks in 2001) and Mexican foods continue to grow the quality and price difference will narrow between the industrial masa flour and traditional masa. New formulations in baked (Maseca® Regular-yellow: 5-20% and <60 mesh) and processed-foods (Maseca® Normal-white flour 70% and < 45 mesh) keep expanding such as corn-based tortilla snacks and maize-flour raviolis prepared from nixtamalized corn flours (U.S. Patent 6,491,959 and Erempoc, King and Ramirez. 1997). The third-generation (3G) cereal foods include the steps of extrusion cooking, followed by cooling, holding and drying to make "cereal pellets" which are expanded by frying or baking to make nixtamalized corn-based foodstuffs (novel masa-based snack in U.S. Patent 5,120,559 and hypercholesterolemia-reducing snack in U.S. 20040086547). Another example is breakfast cereals made by cooking whole grains or grits (wheat, barley, rye, oats, rice or com), followed by cooling, tempering, shredding, forming into "biscuits" and baking or toasting the cereal-based foods (CA 2015149).

The most important biochemical changes during nixtamalization are: an increase in the calcium level with improvement in the Ca to P ratio; a decrease in insoluble dietary fiber and zein-protein; a reduction in thiamin and riboflavin; an improvement of the leucine to isoleucine ratio, reducing the requirement for niacin; niacin-release from pericarp/aleurone/endosperm; and industrial leaching of ferulic-acid (1500 to 1900 ppm: Sanchez, Ramirez and Contreras, 2005), residual insecticides, fungicides and micotoxins into the alkaline steep-liquor or "nejayote" (FAO, 1993 and *Sustain,* 1997). The microflora of fermented and nixtamalized corn dough can yield a spontaneous solid-state fermentation to produce a "sour-dough" (pH<5) named "Pozol" (from the Nahuatl: "pozolli" or foamy). It is a probiotic fermented food involving at least five bacterial and yeast groups which included the natural flora from a freshly-made dough (or nixtamalized corn flour) and consumed as a thin-beverage (cold gruel or drink) by the indigenous population in S.E. Mexico (*Ramirez and Steinkraus,* 1986). The main result of a lactic fermentation is a dispersion of endosperm protein/zein and an enhancement of starch release during subsequent milling for acid-fermented corn beverage or gruel (thin-porridge) such as: Ghanian kenkey, Nigerian ogi-industrial, Kenyan uji and South African mageu-industrial ("yugurtlike corn products": *Steinkraus,* 2004). An industrial lime-treated corn bran (Maseca ® brand) contained 4-5% alcohol-toluene extract (unsaponifiable matter) with a total sterol content of 860-900 ppm (GRAS Notice-61, 2000) and this represents about 50% of a dry-milled corn germ content (Arbokem-Canada, 2000).

New baked foods containing whole grains may qualify to carry labels with the following or other related health claims: a) "Development of cancer depends on many factors. Eating a diet low in fat and high in grain products, fruits and vegetables that contain dietary fiber may reduce your risk of some cancers" (21 CFR 101.76); and b) "Development of heart diseases depends on many factors. Eating a diet low in saturated fat and cholesterol and high in fruits, vegetables and grain products that contain fiber may lower blood cholesterol levels and reduce your risk of heart disease" (21 CFR 101.77 and 81: FDA/DHHS, 2004). Whole-grains or foods made from them contain all of the essential parts and naturally occurring nutrients of the entire seed. If the grain has been processed (e.g. cracked, crushed, rolled, extruded, lightly pearled and/or cooked), the food should deliver approximately the same rich balance of nutrients that are found in the original grain seed. There are marked differences between corn tortillas versus wheat tortilla and bread in relation to: their physico-chemical flour composition, ingredients, dough making and baking process. Wheat and grain-based products use a debranned and degermed wheat/grain flour (forming ingredient). The dough used for making bread and similar products always contains more ingredients than does corn tortilla dough. Examples include texture modifiers (shortening, salt and sugar/syrup), leavening agents (sodium bicarbonate and/or yeast) and characterizing agents (flavor/spice, gums and antimicrobial additives). The base ingredients for corn tortilla include a nixtamalized whole-corn (US 4,513,018) or limed-precooked corn flour (Maseca® brand), with water and antimicrobial or functional additives that can be mixed prior to dough making for baking and packaging for 7-days shelf-life (U.S. Pat. 6,764,699). Most diseases are caused by an incorrect lifestyle and diet. Current habits of eating make people ill and weak, shorten their lifespans, and impair mental and spiritual health (*Know Thyself-prevention is better than cure and health is wealth:* SSSB, 1995). A list of some potential allergenic ingredients (E.U. food labeling regulations, 2005) includes: 1) Cereals containing gluten and products thereof (celiac disease provokes a chronic intestinal inflammation and nutrient malabsorption that is induced by prolamins-rich in prolamine and glutamine from wheat, barley, rye and oat), 2) Soybeans and their products, 3) Milk and dairy products, including lactose and 4) Sulphur dioxide and sulphites at concentrations higher than 10 ppm. Approximately 5% of the North American population suffers, from food allergies, and in Europe the adults (3%) and children (8%) are affected.

A milling or grinding process involves two distinct breakage mechanisms, namely: a) shattering (impact/cut or compress), an operation that results in daughter particles having a size about the same order as that of the parent particle and b) surface erosion (abrasion/attrition or friction), another operation that effects in the generation of fines during the initial stages. The existence of these phenomena was evident from the characteristic bimodal size distribution curve and the progressive change in the relative weight of the large and fine particle populations (*Becker et al.,* 2001 and *Peleg et al.* 1987). The size reduction method of the disk-mill (abrasion) and the impeller-mill (impact) are somewhat different. Within the disk mill, corn particles are broken along lines of weakness by impact and shearing forces; the resultant particles are typically not very small and with poor uniformity of particle size. Particles milled with the impeller mill are forced against an abrasive ring by the high-speed rotating impeller; therefore pieces of the material are worn away from the bulk material. Another factor is the shape of the particles which in turn influence the water uptake and swelling behavior of the apparent viscosity curves. Significant variations in these rheological curves may be due to several factors: size distribution (bimodal/unimodal), particle shape and chemical composition (starch/dietary fiber and protein) which can be changed during the precooking (thermal) and milling (mechanical) operations. In raw maize grits (US mesh 400 to 45 with 75% starch, 8% protein, 5% dietary fiber and 1% fat) which were milled with impeller-mill, the larger particles (> 60 mesh:> 250 µm) produced a lower peak viscosity (at 95°C) and longer peak-time (at 95°C) as compared with the profiles from smaller particles (*Becker et al.,* 2001). They also found that the impeller-mill caused some starch damage along with protein denaturation caused by heat (with temperatures ≤50°C). This mechanical damage can increase the gelatinization degree with a lower apparent viscosity than the unmilled and disk-milled corn grits. A higher protein content (3-fold or 2.4% vs. 0.7%) was measured in the medium impeller particles (mesh 120 to 70: 170 µm-median) effecting a lower peak viscosity (at 95°C) than the medium disk particles by diluting not only their starch content but also denaturing their endosperm protein. Dehydrated-masa prepared by removing the germ from nixtamal resulted in lower peak and final viscosities than both maize and nixtamal dehydrated-masas. Dehydrated-masa prepared from white-maize (stone-mill) resulted in a lower viscosity than nixtamal (*Martinez-Bustos et al.* 2001). Addition of soybean protein in corn-based flours reduced peak viscosity because the starch was diluted in the legume-corn formulation for tortilla and tamal/arepa foods (*Tonella et al.* 1982 and *Ramirez* 1983). The Azteca Milling L.P. corn flour (*Becker et al.,* 2001: Maseca ® brand < 60 mesh with 68% starch, 9% protein, 8% dietary fiber and 4% fat) was used for making an extruded half-product from maize, using a thermo-mechanical extrusion process, and the peak and final viscosities recorded were 5 and 10-fold lower than those for the native grits, respectively. Starch degradation to oligodextrins can increase as extrusion temperature is raised and the moisture level in starch is reduced. Food extruders can be regarded as high-temperature and short-time cookers (<5 min), in which granular starch (grits/flour) having a moisture content of 10-30% is first compressed into a compact dough and is converted into a molten, amorphous mass by the high pressure, heat (60-135°C) and mechanical shearing during processing. A novel extrusion (at 85-90°C) using fine-masa flour (Azteca Milling: Maseca ® brand with 8% total fiber) produced a snack with unique cracker-like structure (faster breakage with same force) and crunchier texture (*Chen et al.* 2002 and U.S. Pat. 5,368,870). They not only detected a higher partial-gelatinization in the masa flour (30-50%) attributed to masa-dough drying (20-30%), but also a more viscous and gelatinized extrudate (>90% gelatinization) half-product pellet (ready to fry: 10-12% water) or tortilla chip (ready to eat: 1-2%). A similar corn-based tortilla chip used a pregelatinized corn flour in an amount of 8 to 65% of the total flour formulation (Maseca ®Regular yellow: with a 20%-60% gelatinization degree). A low-fat and baked product (>5-15% bran) can also be produced with a crispy/crunchy and non-mealy texture with a tortilla flavor (U.S. Pat. 6,491,959).

The first heat/moisture investigations where an excess of water content (starch suspensions or slurries:>30%) was used or where the water content was below 30% (no free water in solid-paste) the type of moisture is clear (*Stute,* 1992). However, in some investigations it is not clear if it was an annealing (low-temperature and long-time: 50-65°C and > 10 h with >50% water) or a heat/moisture treatment (high-temperature and short-time: 95-110°C and <120 min with 15-30% water). The first published viscosity curves showed that a lower peak viscosity with a higher gelatinization temperature (peak viscosity temperature), and-depending on the degree of hydrothermal treatment-at lower degrees a higher and at higher degrees a lower setback. A reduced gelatinization degree (i.e., low swelling capacity) of the starch granules leading to a higher setback (this annealing effect was used to prepare a pudding starch or "pregelatinized potato starch"; Stute, 1992), whereas at higher degrees of modification the swelling is inhibited to such an extent that the setback is lower (this heat-moisture effect is used to make "partial-pregelatinized whole wheat-flours" or instant flours with 15% to 99% degree of gelatinization; Messager, 2002). Jet pasting water hydratable colloids (low 7% to 39% solids or high 61-93% moisture content), such as cereals, starches and cellulose derivatives can be achieved effectively using direct steam injection (high-pressure saturated steam, ranging from 60 to 200 psi). Mixing jet cooking of a corn-starch paste or slurry (10-800 micron) instantaneously heats up above the gelatinization/gelation temperature (pasting temperature of 150°C during 1 to 8 minutes) and vigorously mixes the suspension of granules in water/vapor rapidly swelling starch to achieve hydration, disassociation and dispersion of their polymer-chains to form a fluid sol (*Perry,* 2000). On the contrary a corn-starch extrusion or a corn-starch steam jet-cooking-followed by drum drying (150°C) with low water content (20%) at elevated temperatures (175°C and 140°C) both gave a completely melted or molecularly dispersed/disrupted starch. Extruded corn starches absorb water at room temperature to form pastes made of soluble starch and swollen endosperm with little degradation to oligodextrins (*Shogren et al.* 1993). Therefore, the terms annealing (high-moisture treatment below the gelatinization temperature) and heat-moisture or semi-dry (low-moisture treatment above gelatinization temperature) are describing completely different changes within the starch granule. They can cause a physical modification of starches with different gelatinization or denaturation degree, or any other damage with respect to size only by controlled moisture and heat processing.

Several methods for industrial masa production include, traditional and steam cooking (i.e., low-temperature and long-time), accelerated steam cooking (i.e., high-temperature and short-time), and extrusion cooking (i.e., high-temperature and short-time), with lime-cooking of the whole or ground corn kernel. Corn masa includes the cooked corn in either its wet (fresh masa) or dry (masa or nixtamalized flour) commercial product for tortilla and derivatives. Nixtamalization (limed corn) is derived from the Nahuatl nextli: ashes or lime and tamalli: corn dough. Nixtamalization, or lime heat-treatment, involves an alkaline-cooking by boiling corn in water (1-2% lime). Corn flour processors can generate added value from their industrial operations in three approaches: developing new products from new hybrids, increasing yield (reducing solid waste and nixtamalization wastewater-"nejayote": nextli áyoh-atl or limed thin-porridge) of traditional products from corn, and reducing energy and water at a lower unit cost. In northern South America, particularly in Colombia and Venezuela, food-grade corn is processed with dry milling technology without wastewater and it is further converted into a steam-precooked, degermed (U.S. Pat. 3,212,904 and EP 1,142,488A2) or debranned (EP 0,883,999A2 and U.S. Pat. 6,326,045) flour for traditional corn foods. Its consumption is mainly in the form of an "arepa", which is a flat or ovoid-shaped, unleavened, and baked thick-pancake made from dry-milled corn flour. In other South American countries, corn meal (arepa and polenta) and corn flour are used for different bakery (empanada and pancake mixes), gruel (atolli: "atole" or thin-porridge) and snack foods (FAO, 1993).

Steam cooking of the whole-corn kernel starts with steam injection into a suspension of maize in lime-water (corn to water ratio of 1:2-3 and 1-2% lime on corn basis). Steam in injected to partially gelatinize the corn starch (at 70-95°C during 20 to 100 minutes). The lime-cooked kernel (nixtamal) is allowed to steep overnight (>10 h at 40°C) and is then washed and disk-milled in order to cut, knead and mix the ground nixtamal to form masa. Additional water is added during disk-grinding in order to cool the mill and increase moisture level. A drying step followed by grinding and sifting will yield a dry masa flour for tortilla and chip. Tortillas are the main edible corn product in North and Central America. It is a flat, round, unleavened and baked thin-pancake (flat-cornbread) made from fresh masa or corn dough prepared from industrial nixtamalized corn flour (NCF). It should be mentioned that a tortilla, when manually or mechanically elaborated and without additives of any kind, has a maximum shelf life of 12 hours at room temperature (U.S. Patent 3,730,732).

U.S. Pat. 6,334,228 relates to a continuous process involving pressure pre-cooking corn kernel with saturated-steam and a lime solution. U.S. Pat. 4,594,260 is related to a process whereby the only the hull fraction is subjected to nixtamalization. With accelerated steam-cooking (MX 993,834; US 4,594,260, US 6,344,228 and US 6,387,437), steam is injected under pressure into an aqueous suspension (corn to water ratio of 1-1.5:0.3-1 and 0.3-1.5% lime) may generally range between 1 to about 25 psig (at 70-140°C) during a period of time of 1 to 40 minutes. The nixtamal is washed and cooled to about 80°C, and is then steeped for about 60 minutes. The wet or semi-wet steeped nixtamal is continuously impact-milled and flash-dried effecting a partial cooking or pregelatinization (U.S. Pat. 2,704,257). After classifying the masa flour an increase in water uptake (yield) and peak viscosity (viscoamylograph) will depend on particle size distribution. These prior art methods for industrial masa production involve short-precooking and steeping times with lower soluble-wastes (1.2-2.7% Chemical oxygen demand: *Alvarez and Ramirez, 1995 and Duran-de-Bazúa, 1996*) and total-solids (∼1.5-3.5%: 50-60% dietary fiber, 15-20% ash, 15% starch, 5-10% protein and <5% fat). Extrusion cooking (*Bazúa et al.,* 1979, US 5,532,013, US 6,265,013 and 6,516,710) of a dehulled or whole-corn flour has been tested by extruding a mixture of meal/flour, with lime (corn to water ratio of 1:0.3-0.6 and 0.2-0.25% lime on flour) and water in an extruder cooker or horizontal screw-conveyor until a homogeneous dough or steamed-meal is uniformly heated during 1 to7 minutes at 60-130°C (>20 psig). The cooled corn dough or meal (40-70°C) is further dehydrated in hot air (U.S. Pat. 3,859,452), milled and sieved to yield a partially-dehulled or whole-corn flour. Corn roasting (200-260°C, 5-12 minutes) can depolymerize, by dextrinization, and decrease swelling-potential of cereal and corn starch at low-water content (9-10%).

A continuous process for gelatinizing a starch-containing product which utilizes wet steam is described in U.S. Pat. 4,256,771.

Three recent innovations have been published (WO Pat. 2004/008879, U.S. Pat. 6,516,710 and MX/PA/a/2001/012210) for the preparation of a nixtamalized or instant corn flour by means of a moist-heat cooking, without wastewater ("nejayote") production, as opposed to the traditional wet process referred to above. They obtained a corn foodstuff using a steam-injection during a short-time heating of dehulled-corn or ground corn such that their starch and protein were precooked.

U.S. Pat. 6,326,045 relates to a continuous process for the preparation of a corn flour wherein the whole cleaned kernel is wetted and crushed to obtain two fractions. After drying, sifting and aspiration steps an endosperm-germ fraction is produced. This endosperm-germ fraction is further processed and finally ground to particulate form. The resulting fine particles are used to prepare a flour, whilst the coarse particles are further processed to achieve fine particles.

U.S Pat. 6,638,554 describes a process which comprising enymatic pre-cooking with a xylanase as a processing aid.

Although the above described prior art methods are capable of partial cooking of whole or broken whole-corn, a continuous industrial application using not only a low-moisture with a short-time precooking of dehulled-corn and ground corn but also with a minimum water and energy requirement yielding a masa and whole-corn flour was still unavailable in the market at the time of the invention.

### SUMMARY AND OBJECTS OF THE INVENTION

Accordingly, it is an object of this invention to provide a complete departure from the prior art precooking methods of thermal and mechanical processing of dehulled-corn and ground corn in order to effect a partial gelatinization and denaturation during production of masa and whole-corn flour.

Another object is to produce these masa and instant corn flour utilizing a continuous low-moisture precooking which is not only water and energy consumption efficient but also less expensive than prior art accelerated methods for the elaboration of pregelatinized and instantized corn flours.

Still another objective is to produce masa flour for tortilla and corn-based and whole-corn flour for cereal and grain-based foods wherein such flour is relatively uniform in their biochemical content and physico-chemical properties.

The above and other objects and advantages of the invention are achieved by a new continuous process applied to the production of pregelatinized and instantized corn flours for tortilla and cereal-based foods, embodiments of which comprise the steps: moisturizing the whole cleaned kernel to precondition the same; milling the wetted kernel to produce fine and coarse grind fractions; sifting the fine grind and aspirating from both grind fractions a light-bran fraction as animal feed; remilling the coarse grind for further bran removal; mixing the sifted fine grind with lime powder to produce a limed grind; moist-heat precooking of a stream of corn particles in another stream of saturated steam to obtain a desired starch pregelatinization and protein denaturation degree; venting the waste steam and separating the precooked fine particles; tempering the fine grind to soften and swell the endosperm, germ and bran fractions; hot-air drying the conditioned fine grind and stabilizing for extended shelf-life while extracting exhausted hot-air; cooling with clean air while wasting moist-air from the dried fine grind; milling the agglomerated particles; screening and separating the fine grind so produced from the coarse grind while the latter fraction is further remilled and sieved to obtain a masa flour and whole-corn flour for corn and grain-based foods.

### BRIEF DESCRIPTION OF THE DRAWINGS

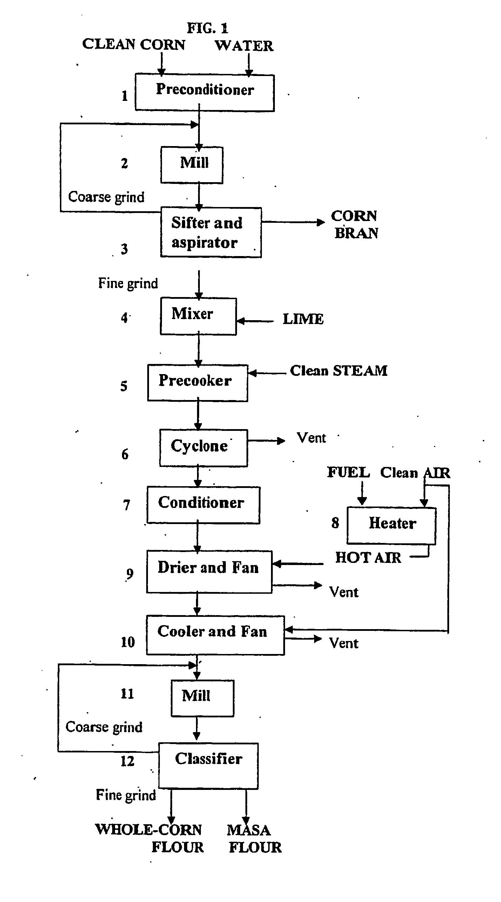

This invention may be understood from the description which follows of preferred embodiments when read with the accompanying drawing in which FIG. 1 is a schematic flow sheet illustrating the continuous and industrial process using a low-moisture precooking of dehulled-corn and ground corn for the elaboration of a masa and whole-corn flour for grain-based foods.

### DETAILED DESCRIPTION OF THE PREFERRED EMBODIMENTS

Referring first to FIG. 1, there is depicted, in flow diagram form, an embodiment of the present invention. It includes a preconditioner 1; a primary mill 2; a sifter 3 with an associated aspirator; a mixer 4; an industrial low-moisture precooker 5; a cyclone 6; a conditioner 7; a heater 8; a drier 9 with a fan; a cooler 10 with an associated fan; a secondary mill 11 and a classifier 12.

Whole corn kernel, which has been freed of broken corn and foreign material by dry cleaning (screening and aspiration), is fed to a preconditioner 1, where the clean corn is continuously sprayed with water during 1 to 3 minutes to uniformly wet and soften the bran, germ and endosperm fractions. Corn moisture is adjusted from about 10-12% to about 16-18% while using a corn to water ratio of 1:0.12 to 1:0.24.

The moisturized kernel is passed through a primary mill 2, which breaks and abrades the bran loose from the kernel, tears out the germ, and coarsely grinds the kernel into two fractions. The large-sized portion of broken corn is known as the coarse grind fraction ("tail stock", and part of it can be isolated as large flaking grits) composed of endosperm, germ and pericarp-bran, while the small-sized portion is described as the fine grind fraction composed of endosperm, germ and aleurone-bran which is also known as "thru stock".

This wet-milled whole corn thus obtained is next directed to a sifter 3 with an associated aspirator wherein three fractions are separated namely, the small finer grind which is thereafter fed to a mixer 4, the large coarser grind (above 16 to 20 mesh) that is recycled to the primary mill 2 for further regrinding, and the light bran which is isolated with airflow as a corn by-product (containing from 14%-16% moisture). This segregated and light bran fraction (above 16 to 20 mesh) can represent from 4%-16% and 1%-3% of the total weight of clean corn for producing a partial-whole (masa) and a whole-corn flour, respectively.

The sieved finer grind (representing a 90% and 98% average of the total weight of incoming corn, respectively) is further conveyed to a mixer 4, wherein it is admixed with food-grade hydrated lime in an amount of about 0.20% and 0.020% by weight to produce a masa and a whole-corn flour, respectively.

After completing the mixing step, the limed and partially-limed fine grind (containing from 16% to about 18% moisture) is transferred to an industrial low-moisture precooker 5, whose design is known per se, wherein saturated steam is injected under pressure into a stream of corn fine particles as they enter the hydrothermal precooker (venturi throat), instantly heating and moisturizing the fine particles to the desired temperature. The temperature is controlled by adjusting the pressure of the injected steam, and preferably from about 150° C to about 170° C. The fine particles stream is further hydrated and dispersed at the elevated temperatures (90°C to 100°C) for about 1 second to about 5 seconds, with the residence time being adjusted by the corn flow rate through the hydrothermal precooker (venturi mixing tube or low-pressure flow tube). Preferably the steam pressure is about 70 psi to 90 psi to control the steam flow rate and ensure that the precooking temperature is set for a fixed corn flow rate. By this means, the precooked fine grind is increased to a moisture content of 20% to about 22%. Its starchy/aleurone endosperm is not only partially gelatinized but their germ and bran proteins are also denatured using this moist-heat treatment for novel flours.

The steam-precooked fine grind is then passed to a cyclone 6, where the waste steam (80°C to 85°C) is vented and separated from the precooked fine grind. Moist-heated fine particles are further tempered in a conditioner 7, wherein the fine grind is tempered during 30 to 60 minutes and from 70°C to 75°C to effect a moisture reabsorption of between 1% to 3%. This step removes the heat and diffusion barriers and allows the condensed steam and added lime to soften and swell endosperm, germ and bran fractions.

Thereafter, the conditioned precooked fine grind is passed through a drier 9 with a fan, whose design is known per se, such that it is mixed with hot air coming from a heater 8 whereby a fuel, such as natural gas, and clean air are used for combustion. The conditioned material is thereby flash dried at a high temperature from 190°C to 260°C for a short time of 2 to 6 seconds with the waste hot air vented (80°C to about 95°C with 18% to 21 % moisture). The drying step causes stabilization for extended shelf-life (> 4 months) and further confers to the flour a typical "toasted/parched" and "limed-corn/nixtamalized" aroma. The corn flour is dried to yield a moisture content of 13 % to about 15% depending on the desired particle size. If desired, the whole-corn flour can be further heat-pregelatinized down to 9% to 13% moisture to make an instantized whole-corn flour used as a cereal-base ingredient in whole-grain foods.

Moisture laden-warm air is removed from the dried corn material through a cooler 10 with an associated fan, thus further reducing the moisture content with ambient clean air, from 9-15% down to 7-12%, depending upon the desired shelf-life of the masa (10-12%) or whole-corn (7-9%) flour. During the low-moisture precooking, tempering, drying and cooling processing stages a certain degree of particle agglomeration will occur and larger corn particles need to be remilled to achieve a uniform product specification.

After further extraction of the moisture, the cooled and dry material is fed to a secondary mill 11, where the agglomerated material is ground into two fractions, namely, a fine grind ("throughs") and coarse grind ("overtails").

The grind material is directed to a classifier 12 with suitably sized screens (under 20 to 120 mesh) wherein the fine grind is segregated as corn flour and the coarse grind is further recycled to the secondary mill 11 and thereafter remilled. The remilled is further sieved for producing a homogeneous corn flour for masa (under 20 to 100) or whole-corn (under 40 to 120 mesh), respectively.

The following table gives a biochemical average composition of whole and partial-whole corn flours: whole-corn for grain foods (< 40 to 120 mesh) and masa for corn foods (< 20-100 mesh). Milled raw-corn (< 20-80 mesh) used for flour.

| Table 1. Biochemical content (g/100 g): * Novel Corn flours | | | |
|---|---|---|---|
| Nutrient | *Whole-corn | *Masa | Raw corn |
| Water | 8.0 | 11.0 | 11.0 |
| Protein | 7.9 | 8.5 | 7.5 |
| Fat Ash | 3.3 1.2 | 4.0 1.5 | 3.8 1.2 |
| Calcium | 0.025 | 0.157 | 0.009 |
| Dietary fiber: | 11.0 | 9.0 | 12.0 |
| Crude fiber | 2.0 | 1.5 | 2.3 |
| Trans-ferulic acid | 0.14 | 0.08 | 0.16 |
| (µmol Trolox-Equivalent:Vitamin-E analog) | (2240) | (1280) | (2520) |
| Starch | 68.6 | 66.0 | 64.5 |
| Total Calories: | 326 | 323 | 312 |

The whole-corn and masa (partial-whole) flours both contain granules from the endosperm, germ along with pericarp and aleurone-bran fractions yielding a large (<40 to 20 mesh) and small/medium (<120 to 100 mesh) fractions of a bimodal-size distribution. There is furthermore a potential in corn flour yield of 98% and 90% of the total weight of low-moisture precooked corn as compared to the continuous arepa/polenta and masa processes which yield from 65-85% to 88-95%, respectively (U.S. Pat. Nos. 6,326,045 and 6,516,710; U.S. Pat. Nos. 6,344,228 and 6,387,437). If the grain has been processed (e.g. cracked, crushed, rolled, extruded, lightly pearled and/or cooked), the whole-food product should deliver approximately the same essential parts and occurring nutrients in the original grain seed. Corn is wet or dry milled (no fiber left) and traditional nixtamalized-corn losses fiber during its wet-alkaline precooking. Therefore the new corn flours produced by the present method have, on average, a higher nutritional value as compared to the conventional methods, with a more fat (2.5-3 fold), dietary fiber (2-3 fold: along with antioxidant ferulic as a biomarker of whole-grain intake, 4-7 fold) and protein (1.3 fold) composition than the commercial dry-milled flours (coarse-grit/fine-grit: debranned/degermed) used in corn-based foods (INCAP, 1961). Whole-grain products retain both bran and germ by providing antioxidant phenolics (trans/cis-ferulic, vanillic and cafeic) and phytic acid-acting independently/synergistically with dietary fiber- to reduce the risk (30% with 3-servings/day) of coronary artery disease, colon cancer and diabetes (*Decker et al.* 2002, *Miller et al. 2000 and Ou et al. 2004*). About 69% of the phenolics present in yellow sweet-corn are insoluble bound forms (1700 ppm dry basis), with ferulic antioxidant being the major compound esterified to xylan side-chains (700, 1000-1800 ppm in white/yellow corn: *Martinez-Bustos et al.* 2001, *Rosazza et al.,* 2004 and *Adom and Liu,* 2002).

In this method, the novel low-moisture precooking results in a reduction of 40% to 80% in water and energy consumption with correspondingly minimum sewage costs, as compared to the industrial masa-flour methods (U.S. Pat. Nos. 6,516,710 and 6,344,228, MX/PA/a/2001/012210). The novel low-moisture precooking (20% to 22%) using a low-lime addition (0.02% and 0.20%) not only aids in partially hydrolyzing the starch/dietary fiber and protein granules but also allows a 50% to 80% reduction in lime if an instant whole-corn flour were produced to introduce new flavors and whole-grain claims. A whole-grain corn definition by the FDA has been requested (AACC, 2005) such that a whole-grain nixtamalized corn masa flour have a 7.3% to 9.6% dietary-fiber content.

The following table shows the physico-chemical properties of whole and partial-whole corn flours: whole-corn for grain foods (< 40 to 120 mesh) and masa for corn foods (< 20-100 mesh). Milled raw-corn (< 20-80 mesh) used for flour.

| Table 2. Physico-chemical properties: * Novel Corn flours | | | |
|---|---|---|---|
| Property | *Whole-corn | *Masa | Raw corn |
| Moisture (%) | 8.0 | 11.0 | 11.0 |
| Yield (g-dough/100g) | 1700-2100 | 2000-2400 | 1300-1500 |
| Adhesivity | 0.4 | 0.7 | 0.0 |
| pH (11% solids) | 6.5 | 7.5 | 6.1 |
| Apparent-viscosity (RVA-4/14% solids): | | | |
| Peak (cps/95°C) | 1310 | 2350 | 2755 |
| Through (cps/95°C | 1190 | 2190 | 2600 |
| Final (cps/50°C) | 2160 | 6290 | 7430 |
| Pasting temp. (°C) Peak time(min/95°C) | 80 6.7 | 78 5.2 | 74 7.0 |

The whole-corn and masa (partial-whole) flours can include coarse (<40 to 20 mesh) and fine/intermediate (<120 to 100 mesh) particles. The large granules are pieces of pericarp-bran, endosperm and germ. The small and medium-sized ones are mostly starchy endosperm, germ and aleurone-bran pieces. Thus, a bimodal-size distribution and biochemical composition both affect not only the physico-chemical properties (apparent-viscosity and adhesivity: U.S. Pat. 3,788,139) in the corn and masa dough but also their yield (water absorption) for grain-foods.

In this method, the yield for masa flour is higher than whole-corn flour and raw-flour, because the low-moisture precooking and drying treatment cause partial starch gelatinization and protein denaturation. However its masa-viscosity was lower than raw-flour but higher than whole-corn viscosity indicating a low-degree of modification for a pregelatinized flour. On the other hand, a high-degree of modification for an instantized flour was detected for a low-yield and whole-corn viscosity showing both moist-heat and semi-dry heat treatment effects.

### EXAMPLE 1

### Preparation of corn-based foods using a pregelatinized masa flour.

1) For use in snacks and tortilla manufacture: The pregelatinized masa and partial whole-flour made from the presented method can be rehydrated with warm water from a 1:1.0 to about 1:1.4 weight ratio for a high-yield masa dough (50% to 55% final moisture) used in the preparation of industrial corn-snacks and commercial tortilla-baked foods. Trans-ferulic was the predominant dietary-fiber antioxidant and it could be liberated during wet processing, especially under alkaline conditions, and during cooking or baking. The masa flour contained about 9% average of dietary fiber and 800 ppm of trans-ferulic content (or expressed as 1280 µmol Trolox Equivalent/100g: *Decker et al.* 2002) and it was 50% lower than the raw-flour (nixtamalized corn flour-Maseca® brand- had an average 8% dietary-fiber: U.S. Patent 6,764,699). This pregelatinized partial-whole flour had a higher ferulic content than dry-milled corn flour (209 ppm) and similar debranned flours (wheat/oat: 59/55 ppm: *Sosulski et al.* 1982 and *Rosazza et al.* 1995). Ferulic acid is a known phenolic antioxidant, being an effective scavenger of free radicals (lipophilic and hydrophilic actitvity as µmol Trolox-Equivalent). It has been reported that ferulic could protect low-density lipoproteins from oxidative damage, exhibited anti-inflammatory properties, inhibited chemical carcinogenesis (in mouse skin) and lipid peroxidation.

It is estimated that corn tortilla per capita consumption in Mexico and Central America is around 240 grams/day (8 tortillas or 150 flour grams) accounting for at least a 30% of the daily calorie intake (AACC, 2001). Therefore, a masa-flour tortilla will provide about 1.2-1.5 fiber grams/serving and three-tortilla servings (56 grams or 2 oz-masa flour: USDA-SR16) would supply at least 15% of the FDA daily fiber value (25 grams). The food-guide pyramid (2005) suggests eating half of your grains whole (6 oz. or grain-servings/day with 4.5 fruit and vegetable cups/day for a 2000 calorie-diet: Mypyramid.gov). Furthermore, a lower consumption of energy-dense foods (high-fat/protein and high-sugar or high-starch) and soft-drinks (high-free sugar) will also reduce the total daily calories to maintain a healthy-weight.

### EXAMPLE 2

### Preparation of grain-based foods using an instant whole-corn flour.

2) For use in whole-grain foods as a cereal-base ingredient: The instant and whole-flour obtained from the aforementioned process can be uniformly mixed with 45% to 49% by weight grain flour in order to increase its ingredient formulation from about 70% to about 80% dietary fiber and from 800% to about 1400% ferulic antioxidant contents. The whole-flour can be rehydrated with warm water from a 1:0.7 to about 1:1.1 weight ratio for a low-yield corn dough (40% to 50% final moisture) used in the preparation of industrial wheat-based and grain-based foods.

Cereal brans contain significant quantities of the phenolic ferulic acids. Their potential health and functional benefits have been related mostly to their antioxidant activity (oxygen radical absorbance capacity-ORAC as µmol Trolox Equivalent/100g: *Decker et al.* 2002). The instant whole-flour had about 11% dietary fiber and about 1400 ppm of trans-ferulic content (2240 µmol T.E. or Vitamin-E analog) and it was similar to the raw corn indicating a minimum alkali-hydrolysis. A Novel Wheat Aleurone (6,600 µmol T.E: 46% fiber and 5000 ppm ferulic, *Ou et al.* 2004) can enhance wheat flour (with a 20% addition) antioxidant content. Hence, the food industry has an opportunity to provide a functional-based (reduced risk of a disease with polyphenols as a defense against oxidative species-type B claim: Consensus Document, 1999) rather than a product-based claim while keeping its shelf-life (> 4 months). A challenge is to make these corn-based foods (along with low-fat/cholesterol diets) more appealing than refined-grains and communicate to the population their healthier attributes. Several epidemiological studies have consistently defined whole grains as those foods that comprise more than 25% whole-grain content or bran by weight (Liu, 2003).

However, the FDA specifies whole-grain products as those meeting the criterion of 51%-61% whole-grain definition by weight on wheat (12.5% fiber), barley (10% fiber), oats (11% fiber), rice (3.5%) and nixtamalized-corn (>7.3%) is still pending *(Anderson* 2004, AACC, 2005). Examples of generally accepted whole grain flours and foods are: amaranth, barley, brown and colored rice, buckwheat, bulgur, corn (sweet and pop) and whole cornmeal, emmer/farro, grano, kamut grain and spelt, oatmeal and whole oats, quinoa, sorghum, triticale, whole rye, whole or cracked wheat, wheat berries and wild rice. Corn and Rice grains are gluten-free for avoiding celiac disease (about 0.8% of the US population has been diagnosed: csaceliacs.org and enabling.org) and certain grains close to corn are safe for celiac patients to eat (millet, sorghum/milo, teff and ragi from Africa and Asia). According to the FAO/WHO (2000) a gluten-free food ingredient must contain <200 ppm (db) for sensitive people (<10 mg-prolamin/day: CX/NFSDU 00/4). The Food Allergy Labeling and Consumer Protection Act (FALCPA) will become effective for any food labeled in 2006. This new law essentially stands for a plain English labeling and no hidden allergens on food labels (wheat, milk, egg, fish, crustacean shellfish, tree-nut, peanut and soybean: *Food Safety Magazine,* 2005).

Therefore, this whole-grain flour can be further used as a cereal-base and functional ingredient during the standard manufacture of reduced gluten (soft/hard wheat, barley, rye and oats) and grain-based foods such as: bar (fruit), biscuit, cookie, cracker, snack (savory and 3G), flat-bread (pita), flour-tortilla (table-tortilla and chapati), crumpet, muffin, empanada, pancake, bulgur, pasta, dumpling, noodle, gruel/porridge (cereal-beverage made with water/milk and flavorings). This whole-corn flour can also be used in traditional and novel gluten-free foods such as: a) An instant drink (gruel) made of Pinole-ground parched flour flavored with sugar and cinnamon/orange, b) Atole is prepared with flour and water along with sugar/honey and cinnamon/anise and c) Mestizo-Chorote/Pozol- is made by mixing water and dough with ground roasted-cocoa beans or with sugar/coconut (Mayan *"Popul Vuh": Ixmucane* took white and yellow corn and made food and drink from which the fat and flesh of man was made; *Sarabia, 1975).*

From the foregoing, it will be apparent that it is possible to manufacture pregelatinized and instant corn flours with a novel continuous process which is efficient because of low-moisture precooking and heat treatment yielding masa flour for corn-based and whole-corn flour for grain-based foods, wherein some of the nutrients, water and energy losses that would have been present but for the features of this invention are prevented.

## Claims

1. A process for making flour comprising the steps of:
providing cleaned corn kernel
preconditioning the cleaned corn kernel with spray water to produce wetted whole corn kernel;
grinding said wetted whole corn kernel by abrading bran portions loose therefrom and milling the wetted whole corn kernel into fine and coarse grind fractions;
sifting and aspirating said fine and coarse grind fractions;
mixing said sifted and aspirated fine grind fraction with lime to produce a limed fine grind;
moist-heat precooking said limed fine grind by injecting a stream of saturated steam;
venting said steam-precooked fine grind;
tempering said precooked limed fine grind to partially hydrate endosperm and swell starch and protein granules thereof, producing tempered corn particles;
hot-air drying said tempered corn particles, producing dried corn particles;
cooling and further drying said dried corn particles with clean ambient air while venting moist air;
milling said cooled and dried corn particles into fine and coarse fractions; and
collecting from the fine fraction a pregelatinized masa flour under 841 to 149 µm (20 to 100 mesh) suitable for tortilla and corn-based foods.

2. The method of claim 1, wherein the sifting and aspirating step comprises removing a light-bran fraction.

3. The method of claim 1 or 2, wherein saturated steam of the moist-heat precooking step has a temperature in the range of 150°C to 170°C.

4. The method of claim 3, wherein the moist-heat precooking step effects a partial starch gelatinization and protein denaturation.

5. The method of any of claims 1-4, wherein the hot-air drying step produces further pregelatinization.

6. The method of any of claims 1-5, wherein the step of milling the cooled and dry corn particles further includes remilling the coarse grind fraction.

7. The method of any of claims 1-6, wherein the grinding and milling step further comprises:
aspirating the fine and coarse grind fractions to isolate a light corn bran fraction;
recycling the aspirated coarse grind; and
remilling the aspirated and recycled coarse grind.

8. The method of any of claims 1-7, wherein said collecting step further comprises collecting an instant whole-corn flour under 400 to 125 µm (40 to 120 mesh) suitable for grain-based foods.

9. The method of any of claims 1-8, wherein said step of moist-heat precooking includes the step of injecting the saturated steam under pressure into the stream of the limed fine grind as the limed fine grind enters the precooker, instantly heating and hydrating particles of the limed fine grind to a moisture content of 20% to 22% during 1 to 5 seconds.

10. The method according to any of claims 1-9, wherein the sifting step separates the fine grind fraction, under 1190 to 841 µm (16 to 20 mesh) from the coarse grind fraction, the fine grind comprising the endosperm, the germ and aleurone-bran fractions, the coarse grind comprising the endosperm, the germ and pericarp-bran fractions.

11. The method of any of claims 1-10, wherein the hot air drying step is performed at a temperature of 190°C to 260°C for a time of 2 to 6 seconds, while removing moisture from said tempered corn particles to a content of 15% to 9%.

12. The method of any of claims 1-11, comprising the further steps of:
rehydrating said pregelatinized masa flour with warm water from a 1:1 to about 1:1.4 weight ratio to form a masa dough; and
making at least one of corn-based foods with dietary fiber and antioxidant ferulic using the partial whole-flour.

13. The method according to any of claims 1-12, further comprising the steps of:
admixing said instant whole-corn flour with 45% to 49% by weight debranned and degermed flour, to produce a whole-grain flour;
rehydrating said instant flour with warm water from a 1:0.7 to about 1:1.1 weight ratio to form a corn dough; and
manufacturing at least one of wheat-based and grain-based foods with increased dietary fiber and ferulic antioxidant content using the whole-flour as a cereal-base and functional ingredient.

## Patentansprüche

1. Verfahren zur Herstellung von Mehl, umfassend die Schritte:
Bereitstellung von gereinigten Maiskörnern,
Vorbehandeln der gereinigten Maiskörner mit Sprühwasser, um befeuchtete ganze Maiskörner herzustellen;
Mahlen der angefeuchteten ganzen Maiskörner durch Abreiben von losen Kleieteilen und Vermahlen der angefeuchteten ganzen Maiskörner in feine und
grobe Mahlfraktionen;
Sieben und Absaugen der feinen und groben Mahlfraktionen;
Mischen der gesiebten und abgesaugten feinen Mahlfraktion mit Kalk, um eine gekalkte feine Mahlfraktion herzustellen;
Vorkochen der gekalkten feinen Mahlfraktion unter feuchter Hitze durch Injizieren eines Strahls gesättigten Dampfes;
Belüften der dampfvorgekochten feinen Mahlung;
Anfeuchten der vorgekochten gekalkten feinen Mahlung, um das Endosperm teilweise zu hydratisieren und Stärke und Proteinkörnchen davon zu quellen, wodurch angefeuchtete Maispartikel hergestellt werden;
Heißlufttrocknen der angefeuchteten Maispartikel, wodurch getrocknete Maispartikel hergestellt werden;
Abkühlen und weiteres Trocknen der getrockneten Maispartikel mit sauberer Umgebungsluft, wobei feuchte Luft entlüftet wird;
Vermahlen der gekühlten und getrockneten Maispartikel zu feinen und groben Fraktionen; und
Sammeln eines vorgelierten Masa-Mehls von der feinen Fraktion unter 841 bis 149 µm (20 bis 100 Mesh), welches für Tortilla und auf Mais basierenden Nahrungsmitteln geeignet ist.

2. Verfahren nach Anspruch 1, wobei der Sieb- und Absaugschritt die Entfernung einer Leichtkleiefraktion umfasst.

3. Verfahren nach Anspruch 1 oder 2, wobei gesättigter Dampf vom Vorkochschritt unter feuchter Hitze eine Temperatur im Bereich von 150 °C bis 170 °C hat.

4. Verfahren nach Anspruch 3, wobei der Vorkochschritt unter feuchter Hitze eine teilweise Stärkegelierung und Proteindenaturierung bewirkt.

5. Verfahren nach einem der Ansprüche 1 bis 4, wobei der Schritt des Heißlufttrocknens eine weitere Vorgelierung ergibt.

6. Verfahren nach einem der Ansprüche 1 bis 5, wobei der Schritt des Vermahlens der gekühlten und trockenen Maispartikel ein weiteres Vermahlen der groben Mahlfraktion beinhaltet.

7. Verfahren nach einem der Ansprüche 1 bis 6, wobei der Schritt des Mahlens und Vermahlens ferner umfasst:
Absaugen der feinen und groben Mahlfraktionen, um eine Leichtmaiskleiefraktion zu isolieren;
Rückgewinnung der abgesaugten groben Mahlung; und
erneutes Vermahlen der abgesaugten und rückgewonnenen groben Mahlung.

8. Verfahren nach einem der Ansprüche 1 bis 7, wobei der Sammelschritt ferner das Sammeln von Instant-Vollmaismehl unter 400 bis 125 µm (40 bis 120 Mesh) umfasst, welches für auf Getreide basierenden Nahrungsmitteln geeignet ist.

9. Verfahren nach einem der Ansprüche 1 bis 8, wobei der Schritt des Vorkochens unter feuchter Hitze den Schritt des Injizierens des gesättigten Dampfes unter Druck in den Strom der gekalkten feinen Mahlung umfasst, wenn die gekalkte feine Mahlung in den Vorkocher eintritt, sofortiges Erhitzen und Hydratisieren der Partikel der gekalkten feinen Mahlung zu einem Feuchtgehalt von 20% bis 22% während 1 bis 5 Sekunden.

10. Verfahren nach einem der Ansprüche 1 bis 9, wobei der Schritt des Siebens die feine Mahlfraktion unter 1190 bis 841 µm (16 bis 20 Mesh) von der groben Mahlfraktion trennt, wobei die feine Mahlung das Endosperm, den Keimling und Aleuron-Kleiefraktionen umfasst und die grobe Mahlung das Endosperm, den Keimling und Perikarp-Kleiefraktionen umfasst.

11. Verfahren nach einem der Ansprüche 1 bis 10, wobei der Schritt des Heißlufttrocknens bei einer Temperatur von 190 °C bis 260 °C für einen Zeitraum von 2 bis 6 Sekunden durchgeführt wird, während die Feuchtigkeit von den angefeuchteten Maispartikeln bis zu einem Gehalt von 15% bis 9% entfernt wird.

12. Verfahren nach einem der Ansprüche 1 bis 11, umfassend die weiteren Schritte:
erneutes Hydratisieren des vorgelierten Masa-Mehls mit warmen Wasser von einem Gewichtsverhältnis von 1:1 bis zu etwa 1:1.4, um einen Masa-Teig zu erzeugen; und
Herstellen mindestens eines auf Mais basierenden Nahrungsmittels mit Ballaststoffen und dem Antioxidans Ferulsäure unter Verwendung des teilweisen Vollmehls.

13. Verfahren nach einem der Ansprüche 1 bis 12, ferner umfassend die Schritte:
Vermischen des Instant-Vollmaismehls mit 45 Gew. % bis 49 Gew. % mit von Kleie befreitem und entkeimtem Mehl, um Vollkornmehl herzustellen;
erneutes Hydratisieren des Instantmehls mit warmen Wasser von einem Gewichtsverhältnis von 1:0,7 bis zu etwa 1:1,1, um einen Maisteig zu erzeugen; und
Herstellen von mindestens einem auf Weizen basierenden und auf Getreide basierenden Nahrungsmittel mit erhöhtem Ballaststoff- und Ferulsäure-Antioxidans-Anteil unter Verwendung des Vollmehls als Zerealienbasis und funktionellem Inhaltsstoff.

## Revendications

1. Procédé de production de farine, comprenant les étapes consistant à :
fournir des grains de maïs nettoyés ;
préconditionner les grains de maïs nettoyés avec de l'eau projetée pour produire des grains de maïs entier humidifiés ;
moudre lesdits grains de maïs entier humidifiés en abrasant les fractions de son qui s'en détachent et en broyant lesdits grains de maïs entier humidifiés de façon à obtenir des fractions finement et grossièrement moulues ;
tamiser et aspirer lesdites fractions finement et grossièrement moulues ;
mélanger ladite fraction finement moulue tamisée et aspirée avec de la chaux pour produire une fine mouture chaulée ;
précuire dans une chaleur humide ladite fine mouture chaulée en injectant un courant de vapeur saturée ;
évacuer ladite fine mouture précuite dans la vapeur ;
tempérer ladite fine mouture chaulée précuite pour hydrater partiellement l'endosperme, l'amidon gonflé et les granulés protéiques de celle-ci, en produisant des particules de maïs tempérées ;
sécher à l'air chaud lesdites particules de maïs tempérées, en produisant des particules de maïs séchées ;
refroidir et encore sécher lesdites particules de maïs séchées avec de l'air ambiant propre tout en évacuant l'air humide ;
broyer lesdites particules de maïs refroidies et séchées en des fractions fines et grossières ; et
collecter à partir de la fraction fine une farine masa prégélatinisée inférieure à 841 à 149 µm (20 à 100 mesh) appropriée pour les tortillas et les aliments à base de maïs.

2. Procédé selon la revendication 1, dans lequel ladite étape de tamisage et d'aspiration comprend l'extraction de la fraction légère de son.

3. Procédé selon la revendication 1 ou 2, dans lequel la vapeur saturée de l'étape de précuisson dans une chaleur humide a une température allant de 150 °C à 170 °C.

4. Procédé selon la revendication 3, dans lequel l'étape de précuisson dans une chaleur humide effectue une gélatinisation partielle de l'amidon et une dénaturation des protéines.

5. Procédé selon l'une quelconque des revendications 1 à 4, dans lequel l'étape de séchage à l'air chaud produit une prégélatinisation supplémentaire.

6. Procédé selon l'une quelconque des revendications 1 à 5, dans lequel l'étape de broyage des particules de maïs refroidies et sèches inclut le rebroyage de la fraction grossièrement moulue.

7. Procédé selon l'une quelconque des revendications 1 à 6, dans lequel l'étape de mouture et de broyage comprend en outre les étapes consistant à :
aspirer les fractions finement et grossièrement moulues pour isoler une fraction légère de son de maïs ;
remettre en circulation la mouture grossière aspirée ; et
rebroyer la mouture grossière aspirée et remise en circulation.

8. Procédé selon l'une quelconque des revendications 1 à 7, dans lequel ladite étape de collecte comprend en outre la collecte d'une farine de maïs entier instantanée inférieure à 400 à 125 µm (40 à 120 mesh) appropriée pour les aliments à base de céréales.

9. Procédé selon l'une quelconque des revendications 1 à 8, dans lequel ladite étape de précuisson dans une chaleur humide comprend l'étape consistant à injecter la vapeur saturée sous pression dans le courant de la fine mouture chaulée dès que la fine mouture chaulée entre dans le précuiseur, instantanément chauffer et hydrater les particules de la fine mouture chaulée jusqu'à une teneur en eau de 20 % à 22 % pendant 1 à 5 secondes.

10. Procédé selon l'une quelconque des revendications 1 à 9, dans lequel l'étape de tamisage sépare la fraction finement moulue inférieure à 1 190 à 841 µm (16 à 20 mesh) à partir de la fraction grossièrement moulue, la mouture fine comprenant l'endosperme, le germe et les fractions d'aleurone-son, la mouture grossière comprenant l'endosperme, le germe et les fractions de péricarpe-son.

11. Procédé selon l'une quelconque des revendications 1 à 10, dans lequel l'étape de séchage à l'air chaud est effectuée à une température de 190 °C à 260 °C pendant une durée de 2 à 6 secondes, tout en extrayant l'humidité desdites particules de maïs tempérées jusqu'à une teneur de 15 % à 19 %.

12. Procédé selon l'une quelconque des revendications 1 à 11, comprenant en outre les étapes consistant à :
réhydrater ladite farine masa prégélatinisée avec de l'eau tiède selon un rapport en masse de 1/1 à environ 1/1,4 pour former une pâte masa ; et
produire au moins un des aliments à base de maïs comprenant des fibres alimentaires et de l'antioxydant férulique en utilisant la farine complète partielle.

13. Procédé selon l'une quelconque des revendications 1 à 12, comprenant en outre les étapes consistant à :
mélanger ladite farine de maïs complète instantanée avec 45 % à 49 % en masse de farine dégermée et décortiquée, pour produire une farine de céréale complète ;
réhydrater ladite farine instantanée avec de l'eau tiède selon un rapport en masse de 1/0,7 à environ 1/1,1 pour former une pâte de maïs ; et
produire au moins un des aliments à base de blé et à base de céréales ayant une teneur en fibres alimentaires et en antioxydant férulique élevée en utilisant la farine complète comme base céréalière et comme ingrédient fonctionnel.
